(19) Europäisches Patentamt
European Patent Office
Office européen des brevets

(11) **EP 2 086 158 B1**

(12) **EUROPEAN PATENT SPECIFICATION**

(45) Date of publication and mention
of the grant of the patent:
**22.06.2011 Bulletin 2011/25**

(51) Int Cl.:
***H04L 7/02*** *(2006.01)*     ***H04L 7/00*** *(2006.01)*

(21) Application number: **08290079.6**

(22) Date of filing: **29.01.2008**

(54) **A clock recovery scheme for an optical receiver based on monitoring precursor and postcursor tap coefficients**

Taktrückgewinnungsschema für einen optischen Empfänger basierend auf der Überwachung der Precursor- und Postcursor-Filterkoeffizienten

Schéma de récupération d'horloge pour un récepteur optique basé sur la surveillance du précurseur et postcurseur des coefficients de prise

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**05.08.2009 Bulletin 2009/32**

(73) Proprietor: **Alcatel Lucent**
**75008 Paris (FR)**

(72) Inventors:
• **Charlet, Gebriel**
**91190 Villiers le Bacle (FR)**
• **Renaudier, Jeremie**
**91190 Gif/Yvette (FR)**

(74) Representative: **Schmidt, Werner Karl**
**Alcatel Lucent**
**Intellectual Property & Standards**
**74430 Stuttgart (DE)**

(56) References cited:
**EP-A- 1 111 837**    **WO-A-01/91361**
**US-A- 4 061 978**    **US-A- 4 146 840**
**US-A- 4 334 313**

• **GITLIN R D ET AL: "CENTER-TAP TRACKING ALGORITHMS FOR TIMING RECOVERY" AT & T TECHNICAL JOURNAL, AMERICAN TELEPHONE AND TELEGRAPH CO. NEW YORK, US, vol. 66, no. 6, 1 November 1987 (1987-11-01), pages 63-78, XP000674116 ISSN: 8756-2324**
• **HODGKISS W: "Equaliser-based clock extraction for modems" ELECTRONICS LETTERS, IEE STEVENAGE, GB, vol. 30, no. 16, 4 August 1994 (1994-08-04), pages 1277-1279, XP006000862 ISSN: 0013-5194**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to optical communication systems, in particular to an apparatus and a method for clock recovery for use in a fiber optics receiver.

In high speed optical transmission systems, e.g., 10, 40 or 100 Gbit/s transmission systems, high speed data is transmitted without an accompanying clock signal being phase and frequency aligned to the transmitted data. For synchronizing the receiver with the received high speed data the receiver needs to locally generate a clock signal, the phase and frequency thereof being controlled based on the received data, e.g., based on data transitions. This process is called clock recovery.

Typically, a clock recovery circuit uses a phase locked loop (PLL). In a conventional analog clock recovery circuit an analog phase comparator within the clock recovery circuit compares phase information of the received data signal (in particular the phase information of data transitions), with the phase of a locally generated clock signal, thereby generating a phase error signal characterizing the phase difference. The phase error signal is typically low pass filtered (i.e., integrated) before being fed to the input of a voltage controlled oscillator (VCO), with the VCO generating the local clock signal. The output frequency of the VCO depends on the input voltage of the VCO.

In fiber optics communications, two ways to detect the received light exist: direct detection and coherent detection.

In direct detection based systems, the photodetector at the receiver is typically directly fed by on-off modulated light and the resulting current of the photodetector corresponds to the received optical power. However, the phase information is lost (however, with differential detection, phase difference between adjacent bits can be recovered).

In coherent detection receivers, the received optical light is coherently superpositioned with a single-frequency optical local oscillator (LO) signal. Such coherent detection receivers allow detecting the phase of the received signal as necessary for phase modulation schemes (e.g., QPSK - quadrature phase shift keying). In case of heterodyne or intradyne coherent detection, there is a frequency offset between the carrier frequency of the optical signal and the frequency of the LO signal. Alternatively, in case of homodyne detection, the carrier frequency of the received optical signal and the frequency of the LO signal coincide.

In coherent receivers the down-converted signal is typically converted to the digital domain by one or more analog-digital-converters and processed in the digital domain. Association of coherent detection with digital signal processing allows compensating for high values of chromatic dispersion (CD) and polarization mode dispersion (PMD). Thus, such coherent systems are PMD and CD tolerant.

However, when compensating high values of optical distortion by means of digital signal processing in such coherent systems, standard analog clock recovery schemes do not work anymore due to the high level of optical distortion. The phase information of such highly distorted received signal cannot be determined by an analog phase comparator.

Alternatively, in coherent optical receivers digital clock recovery schemes may be used which are more tolerant to optical distortion. E.g., one may use oversampling processing after digital CD compensation. However, existing digital clock recovery schemes, in particular digital clock recovery schemes based on oversampling of the received signal, require high processing power and thus suffer from high power dissipation.

US 4,334,313 discloses a timing recovery scheme. The receiver timing is adjusted such that two coefficients in a queue of equalizer coefficients, one on either side of the boundary between the front and back portions of the queue, are maintained substantially equal in complex magnitude. In particular, the location of the coefficient having the largest complex magnitude is identified in each symbol interval. If this coefficient is found to be in the front of the queue, a retard signal is generated. Otherwise, i.e., if this coefficient is found in the back of the queue, an advance signal is generated.

It is an object of the present invention to provide a clock recovery apparatus for use in distortion tolerant optical receiver, in particular for a coherent receiver, with the clock recovery apparatus reliably operating even in case of a highly distorted received signal and consuming less power than conventional digital clock recovery schemes. It is further an object of the invention to provide an optical receiver comprising such clock recovery apparatus and to provide a corresponding clock recovery method.

These objects are achieved by the clock recovery apparatus, the optical receiver and the method for clock recovery according to the independent claims.

A first aspect of the invention relates to a clock recovery apparatus for use in an optical receiver, in particular for use in a coherent receiver. Such receiver comprises electrical sampling means clocked by a clock signal for sampling a received signal, in particular one or more ADCs (analog-digital-converter). Alternatively, the sampling means may be also realized in form of fully-digital re-sampling means.

Further, in the receiver an adaptive multi-tap filter comprising four tapped delay lines being part of a polarization demultiplexer or being downstream of a polarization demultiplexer is provided, which is connected downstream of the sampling means and receives adjustable tap coefficients. Besides being used for the clock recovery as will be explained hereinafter, such multi-tap filter is typically provided in an optical receiver with digital signal processing for use of equalization. Such filter is used in a receiver with polarization diversity to combine two received polarization components, in particular to demultiplex a polarization multiplexed signal or a polarization modulated signal.As discussed above the multi-tap filter comprises four tapped delay lines, e.g., four tapped delay lines are typically used for the realization of a polarization demultiplexer.

A multi-tap delay line has precursor and postcursor taps typically located around a main tap (e.g., the middle tap), with the main coefficient typically having the largest tap coefficient. Alternatively, a delay line may have only precursor and postcursor taps with no distinct main top in between or a plurality of main taps.

For determining the tap coefficients of the multi-tap filter coefficients determining means are provided in the receiver, e.g., the coefficients determining means may be configured to carry out a constant modulus algorithm (CMA) for determining the tap coefficients. Instead of the CMA, other algorithms may be used for determining the tap coefficients.

The inventive clock recovery apparatus is based on using information of tap coefficients and controlling the frequency of a local generated clock in dependency of the information of the tap coefficients.

The clock recovery apparatus comprises comparison means for comparing precursor and postcursor tap coefficients associated to the four delay lines.

The comparison means are configured for determining a weight of said precursor tap coefficients associated to the four delay lines and a weight of said postcursor tap coefficients associated to the four delay lines. The comparison means are configured to compare the weight of said precursor tap coefficients with the weight of said postcursor tap coefficients, i.e., the comparison means are configured to compare precursor and postcursor tap coefficients associated to four FIR (finite impulse response) sub-filters. Four tapped delay lines may be used to realize a polarization demultiplexer for demultiplexing a polarization multiplexed optical signal as will be explained in more detail later on in the description. Alternatively, in case of receiving a polarization modulated optical signal such polarization demultiplexer may be used to generate two signals assigned to the two orthogonal polarization states. In case of a polarization modulated signal optionally also the phase of the optical signal may be modulated, leading to polarization-shift keying in combination with phase-shift keying (e.g. BPSK - binary phase-shift keying). Also, four tapped delay lines may be used for realization of a signal equalizer in case of receiving a polarization multiplexed signal or polarization modulated signal (the signal equalizer may be located upstream or downstream of the polarization demultiplexer).

Advantageously, in case of an imbalance between the weights, a feedback signal is generated to adjust the frequency of the clock signal. The frequency of the clock signal may be increased or decreased as a function of the sign of the imbalance between the weights. In particular, the comparison means may be configured to generate a signal for increasing the frequency of the clock signal if the weight of said precursor tap coefficients is larger than the weight of said postcursor tap coefficients. If the weight of said postcursor tap coefficients is larger than the weight of said precursor tap coefficients, the comparison means may generate a signal for decreasing the frequency of the clock signal.

Usually, when the clock is locked to the received signal, precursor and postcursor tap coefficients are more or less balanced. However, if the clock is not locked, the coefficients become unbalanced. Such imbalance may be determined by the comparison means and the information is used for controlling the frequency of the clock signal, which is generated in clock generation means.

The inventive clock recovery apparatus has the advantage of providing a simple and less power consuming scheme for clock recovery based on already available information, i.e., the values of the tap coefficients. In particular, when the filter is connected downstream of digital electrical means for compensating optical dispersion (e.g., CD), the clock recovery apparatus is highly distortion tolerant. Moreover, the clock recovery apparatus has only moderate power consumption due to less digital processing effort compared to conventional digital clock recovery schemes.

It should be noted that it is not mandatory that all precursor and postcursor tap coefficients of a delay line are monitored for clock recovery. Preferably, the same number of precursor and postcursor tap coefficients of a delay line are monitored. The filter and the delay lines may be realized in digital hardware (e.g., an ASIC - application-specific integrated circuit; or an FPGA - field-programmable gate array) or in software by using a DSP (digital signal processor).

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e., the claims can be basically combined in any order.

A second aspect of the invention relates to an optical receiver, in particular to a coherent receiver, comprising a clock recovery apparatus as discussed above. The above remarks related to the clock recovery apparatus and its preferred embodiments are basically also applicable to the receiver according to the second aspect of the invention. The receiver comprises an adaptive multi-tap filter comprising four tapped delay lines being part of a polarization demultiplexer or being downstream of a polarization demultiplexer and precursor and postcursor tap coefficients associated to the four delay lines are compared to control the frequency of the clock signal. This is performed by comparing a weight of precursor tap coefficients associated to the four tapped delay lines and a weight of postcursor tap coefficientts associated to the four tapped delay lines. A polarization demultiplexer may be used to demultiplex a polarization multiplexed signal. Alternatively, in case of receiving a polarization modulated optical signal a polarization demultiplexer may be used to generate two signals assigned to the two orthogonal polarization states. In case of a polarization modulated signal optionally also the phase of the optical signal may be modulated.

A third aspect of the invention relates to a method for clock recovery in such optical receiver. The method comprises the step of comparing precursor and postcursor tap coefficients associated to said four delay lines in particular determining imbalance between the precursor and postcursor tap coefficients. This is done by comparing a weight of precursor tap coefficient associated to the four tapped delay lines and a weight of postcursor tap coefficient associated to the four tapped delay lines. The clock signal is controlled in dependency of the comparison. The above remarks related to the clock recovery apparatus and its preferred embodiments are basically also applicable to the method according to the third aspect of the invention.

The invention is explained below in an exemplary manner with reference to the accompanying drawings, wherein

Fig. 1     illustrates an embodiment of the optical part of a coherent receiver with polarization demultiplexing according to the invention;

Fig. 2     illustrates an embodiment of the electrical part of a coherent receiver with polarization demultiplexing according to the invention;

Fig. 3     illustrates an embodiment of an (N+1)-taps adaptive filter for polarization demultiplexing and equalization;

Fig. 4     illustrates the classification of the tap coefficients as precursor and post- cursor coefficients;

Fig. 5     illustrates a first embodiment of a polarization demultiplexing and equali- zation unit;

Fig. 6     illustrates exemplary time dependent courses of the weight $w_{even}$ of the postcursor coefficients and the weight $w_{pre}$ of the precursor coefficients in case of no frequency offset (feedback loop open);

Fig. 7     illustrates exemplary time dependent courses of the weight $w_{post}$ of the postcursor coefficients and the weight $w_{pre}$ of the precursor coefficients in case of a frequency offset (feedback loop open);

Fig. 8     illustrates exemplary time dependent courses of the weight $w_{post}$ of the postcursor coefficients and the weight $w_{pre}$ of the precursor coefficients in case the feedback loop is closed; and

Fig. 9     illustrates a second embodiment of a polarization demultiplexing and equalization unit.

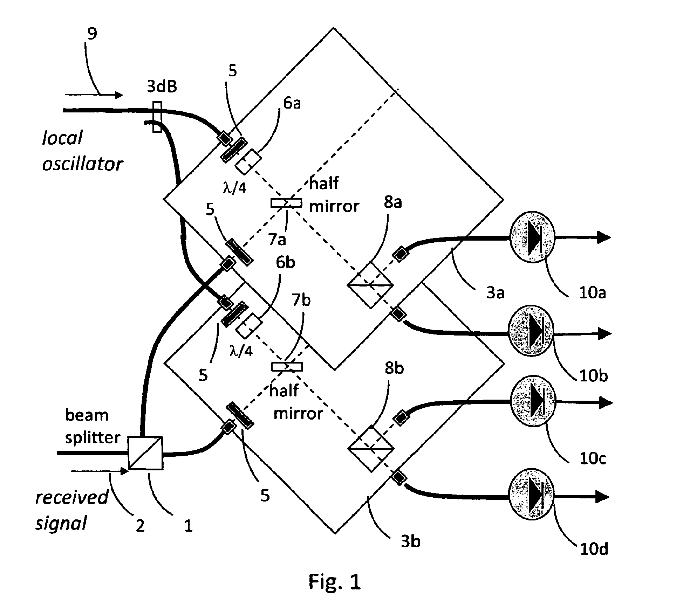

Fig. 1 shows an embodiment of the optical part of a phase-diversity and polarization-diversity coherent receiver with polarization multiplexing functionality. The coherent receiver is configured for receiving and demultiplexing a polarization division multiplexed (PDM) optical signal. Polarization division multiplexed formats are often used in combination with coherent detection. The transmitted PDM signal comprises a first signal component (e.g., a first QPSK signal) having a first polarization and a second signal component (e.g., a second QPSK signal) having a second polarization orthogonal to the first polarization.

The receiver in Fig. 1 is configured to generate in-phase and quadrature-phase components (phase-diversity) of the downconverted received signal for two orthogonal polarizations (polarization-diversity).

The receiver comprises a polarization beam splitter (PBS) 1, which splits the received optical signal 2 into a first optical wave and a second optical wave, with the polarizations of the first and second optical waves being orthogonal. Due to shifting of the polarization along the fiber, the signals of the first and second optical waves typically do not correspond to the first and second components of the transmitted PDM signal, respectively.

The first optical wave is fed to a first coherent demodulator 3a, whereas the second optical wave is fed to a second coherent demodulator 3b. Both the first coherent demodulator 3a and the second coherent demodulator 3b receive a local oscillator (LO) signal 9 for superimposing the first optical wave and the second optical wave with the LO signal 9, respectively. In case of homodyne detection, the carrier frequency of the received optical signal 2 and the frequency of the LO signal 9 coincide. Alternatively, in case of heterodyne coherent detection, there is a frequency offset between the carrier frequency of the optical signal 2 and the frequency of the LO signal 9, which needs to be compensated in an electrical downconversion stage (not shown).

Polarizers 5 at the inputs of the demodulators 3a and 3b can be used to improve the polarization quality. Subsequently to polarizers 5, at the LO input of both demodulators 3a, 3b a λ/4 wave plate 6a, 6b is provided. The wave plates 6a, 6b are used for making the polarization of the LO signal 9 circular, while the signal remains linearly polarized. After passing through half mirrors 7a, 7b for superimposing the LO signal 9 and received signals, PBS 8a, 8b are used for each generating two orthogonal phases. The polarization angle of the signal when hitting half mirrors 7a, 7b is 45° with respect to the principal axis of PBS 8a, 8b.

The four outputs of the two demodulators 3a, 3b are coupled to the inputs of four photodiodes 10a-10d, thereby generating four electrical currents $I_{10a}$, $I_{10b}$, $I_{10c}$, $I_{10d}$. The beat term of current $I_{10a}$ of photodiode 10a corresponds to the quadrature-phase component of a first polarization of the downconverted signal. The first polarization corresponds to the polarization of the first wave as generated by PBS 1. The beat term of current $I_{10b}$ of photodiode 10b corresponds to the in-phase component of the first polarization of the downconverted signal. The beat term of current $I_{10c}$ of photodiode 10c corresponds to the quadrature-phase component of a second polarization of the downconverted signal. The second polarization corresponds to the polarization of the second wave as generated by PBS 1. The beat term of current $I_{10d}$ of photodiode 10d corresponds to the in-phase component of the second polarization of the downconverted signal.

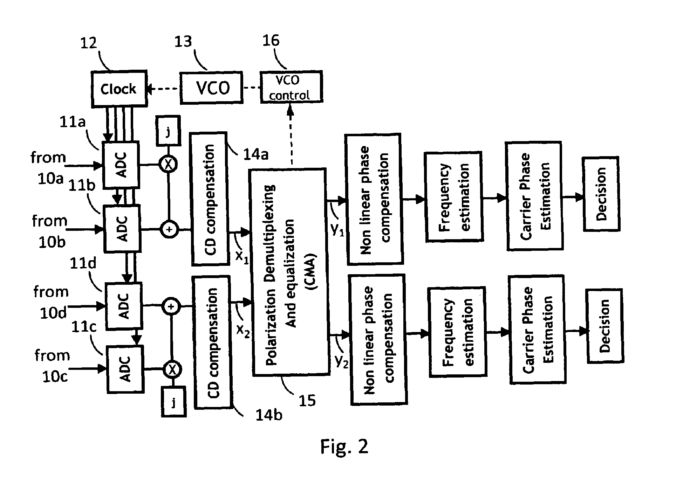

As indicated in Fig. 2 illustrating the electrical part of the receiver, the downconverted signal components for both polarizations are fed to four ADCs 11a-11d for sampling the signal components. The ADCs 11 a-11d are clocked by a clock signal supplied by a clock block 12. The clock block 12 is configured to supply and (optionally convert) a clock signal as generated by a VCO 13 to the ADCs 11a-11d. The clock block 12 may comprise, e.g., one or more clock tree amplifiers, frequency converters (e.g., frequency dividers or multipliers) and/or phase shifters.

After sampling, the received digital signals are processed in a digital signal processor (DSP) or in customized digital hardware (or in a combination of both). The digital output signal of ADC 11a (corresponding to the quadrature-phase component) is multiplied by "j" and added to the digital output signal of ADC 11b (corresponding to the in-phase component). Analogously, the digital output signal of ADC 11c (corresponding to the quadrature-phase component) is multiplied by "j" ("j" is the complex number such that $j^2 = -1$) and added to the digital output signal of ADC 11d. (corresponding to the in-phase component). The two resulting complex signals are fed in two CD compensation blocks 14a, 14b for compensating CD in the digital domain. The two complex output signals $x_1$, $x_2$ of the CD compensation blocks 14a, 14b are fed to a polarization demultiplexing unit and equalization unit 15.

As mentioned above, clock recovery can only be done after compensation of CD (within the DSP). Thus, no standard clock recovery method can be used. In a previous approach, off-line processing was used having a digital clock recovery block inserted between CD compensation blocks 14a, 14b and polarization demultiplexing and equalization unit 15. However, this approach is only feasible for off-line processing because it involves over-sampling routines that are extremely power-consuming and hence inappropriate for real-time implementation.

To overcome this problem, in the receiver of Fig. 2 the results from a multi-tap filter used for demultiplexing and/or equalization are used to tune the output frequency of the clock block 12 that clocks the ADCs 11a-11d by the help of a feedback through the VCO 13. In particular, a feedback signal for clock recovery is extracted from adaptive filter coefficients in the polarization demultiplexer and equalization unit 15.

Basically, the polarization demultiplexing and equalization unit 15 is used to rotate the received signal components $x_1$, $x_2$ for recovering the initial polarization components as multiplexed in the transmitter and for removing interferences between the two polarization components.

This basic rotation function of a polarization demultiplexer having output signals $y_1$, $y_2$ (which should correspond to the original polarization components) may be specified as:

$$\begin{pmatrix} y_1(k) \\ y_2(k) \end{pmatrix} = \begin{pmatrix} \cos\theta\, x_1(k) + \sin\theta\, x_2(k) \\ -\sin\theta\, x_1(k) + \cos\theta\, x_2(k) \end{pmatrix} = \begin{pmatrix} \cos\theta & \sin\theta \\ -\sin\theta & \cos\theta \end{pmatrix}\begin{pmatrix} x_1(k) \\ x_2(k) \end{pmatrix} = \begin{pmatrix} h_{11} & h_{12} \\ h_{21} & h_{22} \end{pmatrix}\begin{pmatrix} x_1(k) \\ x_2(k) \end{pmatrix}$$

The elements $h_{ij}$ of the rotation matrix represent the coefficients of an adaptive filter, which are temporally updated.

To improve the accuracy of the filter and to use the filter also for signal equalization, the filter does not simply describe a rotation matrix but information from neighboring samples around the main samples is also taken into account as indicated below:

$$\begin{pmatrix} y_1(k) \\ y_2(k) \end{pmatrix} = \begin{pmatrix} h_{11}(0)x_1(k) + h_{12}(0)x_2(k) \\ h_{21}(0)x_1(k) + h_{22}(0)x_2(k) \end{pmatrix} + \cdots + \begin{pmatrix} h_{11}(N/2)x_1(k-N/2) + h_{12}(N/2)x_2(k-N/2) \\ h_{21}(N/2)x_1(k-N/2) + h_{22}(N/2)x_2(k-N/2) \end{pmatrix} +$$
$$\cdots + \begin{pmatrix} h_{11}(N)x_1(k-N) + h_{12}(N)x_2(k-N) \\ h_{21}(N)x_1(k-N) + h_{22}(N)x_2(k-N) \end{pmatrix}$$

The coefficients $h_{ij}$ are complex numbers.

In the following it is assumed that the main or cursor samples are the central (= middle) samples $x_1(k-N/2)$, $x_2(k-N/2)$. Thus, the precursor samples are the samples $x_{1,2}(k)$ to $x_{1,2}(k-N/2+1)$ and the postcursor samples are the samples $x_{1,2}(k-N/2-1)$ to $x_{1,2}(k-N)$.

The filter as described by the above equation processes at the same time a plurality of samples which are temporally spaced or delayed by one symbol length (T-spaced) or half a symbol length (T/2-spaced). The samples used for the filter are called "taps" and the expression "(N+1)-taps filter" means that the filter uses N neighboring taps around a central tap.

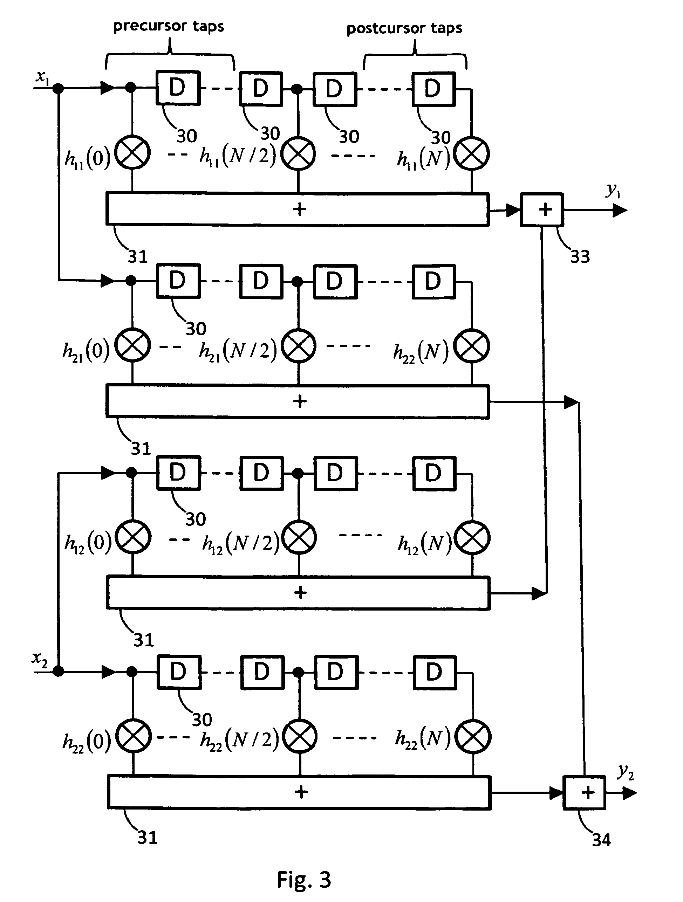

Fig. 3 illustrates an embodiment for such an (N+1)-taps adaptive filter corresponding to the above equation which may be used in the polarization demultiplexing and equalization unit 15. The filter and the delay lines may be implemented in digital hardware or in software by using a DSP. The filter comprises four FIR sub-filters (finite impulse response). Each FIR sub-filter comprises four tapped delay lines, each tapped delay line comprising N identical delay elements 30 having a delay of one symbol length or alternatively a delay of a fraction of a symbol length, e.g., half the symbol length. Each delay line has precursor taps and postcursor taps located around the main tap, with the main tap being the central tap.

Each tap of the N+1 taps of each delay line is multiplied by a coefficient $h_{ij}$. The multiplied tap values of each tapped delay line are summed in adders 31. The first complex signal $x_1$ associated to a first polarization is fed to the first and second delay lines (numbering of delay lines from top to bottom in Fig. 3), whereas the second complex signal $x_2$ associated to a second polarization is fed to the third and fourth delay lines. The outputs of the adders 31 associated to the first and third delay lines are combined by an adder 33, with the output signal $y_2$ of adder 33 corresponding to the first multiplexed polarization component. Analogously, the outputs of the adders 31 associated to the second and fourth delay lines are combined by an adder 34, with the output signal $y_2$ of adder 34 corresponding to the second multiplexed polarization component. It should be noted that the two adders 31 associated to the first and third delay lines and adder 33 may be combined. Analogously, also the two adders 31 associated to second and fourth delay lines and adder 34 may be combined.

Usually, the magnitude of the tap coefficients $h_{ij}$ is decreasing from the main tap (here the central tap) towards the neighboring taps and the main tap should have the highest value. Especially when polarization division multiplexing quadrature phase shift keying (PDM QPSK) is used with the signal on both polarizations being temporally aligned, the tap coefficients $h_{ij}$ have large values for the central taps and very low values on the neighboring taps.

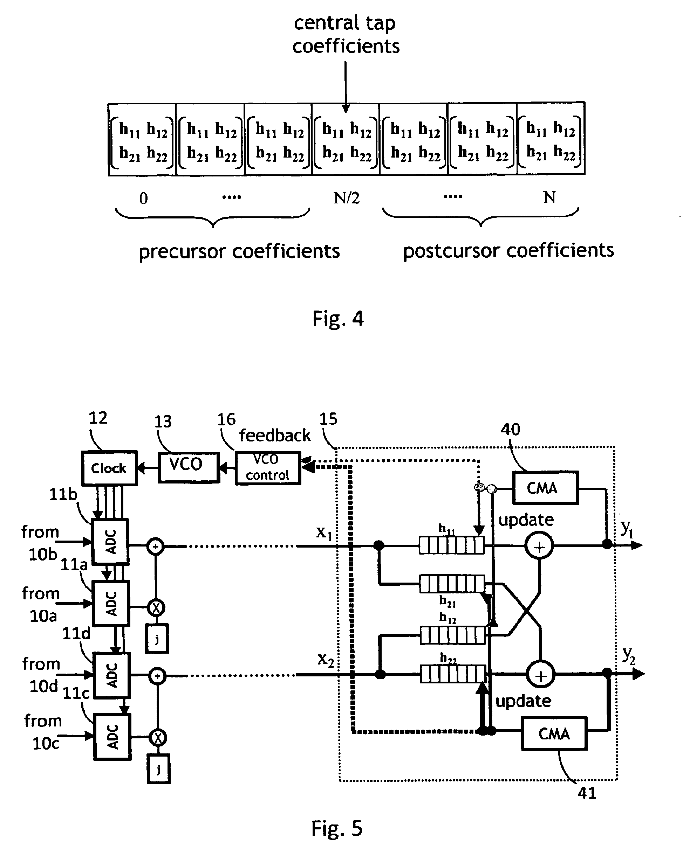

As indicated in Fig. 4, in the following the precursor tap coefficients $h_{ij}(0)$ to $h_{ij}(N/2-1)$ are referred to as precursor coefficients and the postcursor tap coefficients $h_{ij}((N/2+1)$ to $h_{ij}(N)$ are referred to postcursor coefficients. The central tap coefficients $h_{ij}(N/2)$ are the main tap coefficients.

In this embodiment, said property of the tap coefficients in the polarization demultiplexing and equalization unit 15 is used to tune the frequency of the clock signal driving the ADCs 11a-11d by means of a feedback (see feedback in Fig. 2 from the polarization demultiplexing block 15 via the VCO control block 16, via the VCO 13, via the clock block 12 to the ADCs 11a-11d).

When the clock is locked to the received data signal, the precursor coefficients $h_{ij}(0)$ to $h_{ij}(N/2-1)$ and the postcursor coefficients $h_{ij}(N/2+1)$ to $h_{ij}(N)$ are balanced around the central tap coefficients $h_{ij}(N/2)$. However, when the clock is not locked to the received signal, the weights of these coefficients become unbalanced.

The weight $w_{pre}$ of the precursor coefficients may be defined as:

$$w_{pre} = \sum_{0}^{N/2-1}\sum |h_{ij}|$$

Analogously, the weight $w_{post}$ of the postcursor coefficients may be defined as:

$$w_{post} = \sum_{N/2+1}^{N}\sum |h_{ij}|$$

If the weight $w_{pre}$ of the precursor coefficients (i.e., the first half of coefficients when disregarding the central taps) is larger than the weight $w_{post}$ of the postcursor coefficients (i.e., the second half of coefficients), the frequency of the recovered clock has to be increased and vice versa.

Fig. 5 illustrates a first embodiment of the polarization demultiplexing and equalization unit 15 in Fig. 2 and an embodiment of the feedback loop for clock recovery. As already discussed in connection with Fig. 3, the polarization multiplexing and equalization unit 15 comprises four FIR sub-filters for polarization demultiplexing and signal equalization. In Fig. 5 only the tap coefficients of the FIR sub-filters are shown. For polarization demultiplexing and equalization a constant modulus algorithm (CMA) is used, i.e., the tap coefficients $h_{ij}$ of the filter are computed by means of the CMA. For performing the CMA and computing the tap coefficients $h_{ij}$, CMA blocks 40, 41 are provided. The CMA blocks update the tap coefficients $h_{ij}$ in dependency on the current output values $y_1$, $y_2$ of the polarization multiplexer.

The CMA is discussed in the document "Digital Equalisation of 40Gbit/s per Wavelength Transmission over 2480km of Standard Fibre without Optical Dispersion Compensation", S.J. Savory et al., Proceedings of ECOC 2006, Cannes, France, paper Th2.5.5, Sep. 2006.

For signals of unit amplitude, the CMA tries to minimize the magnitude of the error terms $\varepsilon_{y1}$, $=1-|y_1|^2$ and $\varepsilon_{y2}$ $=1-|y_2|^2$.

According to the CMA, the tap coefficients are computed in the CMA blocks 40, 41 in the following way:

$$\underline{h}_{11}' = \underline{h}_{11} + \mu\varepsilon_{y1}y_1 \cdot \underline{x}_1^*$$

$$\underline{h}_{12}' = \underline{h}_{12} + \mu\varepsilon_{y1}y_1 \cdot \underline{x}_2^*$$

$$\underline{h}_{21}' = \underline{h}_{21} + \mu\varepsilon_{y2}y_2 \cdot \underline{x}_1^*$$

$$\underline{h}_{22}' = \underline{h}_{22} + \mu\varepsilon_{y2}y_2 \cdot \underline{x}_2^*$$

Here, the terms $\underline{h}_{ij}'$ denote the updated vectors of tap coefficients $h_{ij}(0)$ to $h_{ij}(N)$, the terms $\underline{h}_{ij}$ denote the actual vectors of tap coefficients $h_{ij}(0)$ to $h_{ij}(N)$, $\mu$ is a convergence parameter and the terms $\underline{x}_j^*$ denote the actual vector of the complex conjugate of the samples $x_j(k)$ to $x_j(k - N)$.

Although not shown in the simplified block diagram in Fig. 5, the updated tap coefficients $h_{ij}$ are computed in dependency of the samples $x_j(k)$ to $x_j(k - N)$ as apparent from the above equations.

For controlling the frequency of the VCO 13 by the VCO control block 16, the VCO control block 16 receives the tap coefficients $h_{ij}$ and determines the weight $w_{post}$ of the postcursor coefficients and the weight $w_{pre}$ of the precursor coefficients. If the weight $w_{pre}$ of the precursor coefficients is larger than the weight $w_{post}$ of the postcursor coefficients, a feedback signal is sent to the VCO input to increase the frequency of the recovered clock signal. If the weight $w_{pre}$ of the precursor coefficients is smaller than the weight $w_{post}$ of the postcursor coefficients, a feedback signal is sent to the VCO input to decrease the frequency of the recovered clock signal. The VCO control block 16 may also comprise a loop filter, e.g., a low-pass filter. Instead of the VCO control block 16, the CMA blocks may calculate the weights $w_{post}$ and $w_{pre}$ and optionally generate also a comparison signal.

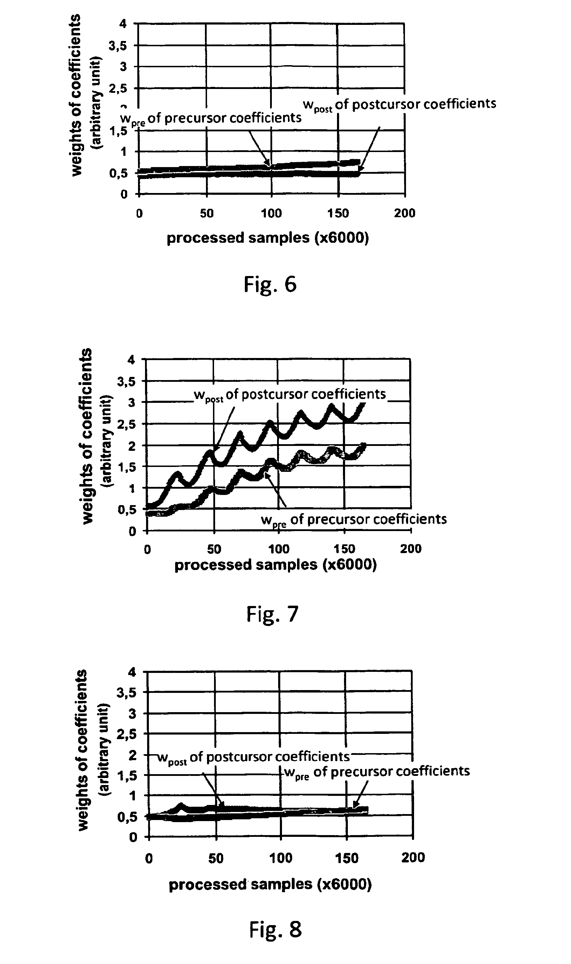

Fig. 6 shows exemplary time dependent courses of the weight $w_{post}$ of the postcursor coefficients and the weight $w_{precursor}$ of the precursor coefficients computed from an experimental data file. The illustrated weights $w_{post}$ and $w_{pre}$ are given in an arbitrary unit. For polarization demultiplexing, a 5-taps T/2-spaced filter is used (in total 4·5 taps). In Fig. 6, the frequency of the clock signal (here: 10.709228 GHz) is set to be matched to the received data signal (the feedback loop in Fig. 5 is not closed). Fig. 6 shows that the weights $w_{post}$ and $w_{pre}$ are almost perfectly balanced. The bit error ratio (BER) is measured to $1 \cdot 10^{-4}$.

Derived from the same data file, Fig. 7 shows the time dependent courses of the weights $w_{post}$ and $w_{pre}$ when the clock was intentionally shifted by an amount of 100 KHz leading to a clock frequency of 10.709128 GHz (the feedback loop in Fig. 5 is not closed). In this case the weights $w_{post}$ and $w_{pre}$ are diverging and most of all not balanced anymore. Due to the frequency shift, the measured BER increases to $2.6 \cdot 10^{-2}$. The weight $w_{post}$ of the postcursor coefficients is larger than the weight $w_{pre}$ of the precursor coefficients indicating that the frequency of the clock signal has to be increased. To compensate for the frequency offset, a feedback signal has to be sent to the clock generation means, i.e., to the VCO 13 to increase the clock frequency.

Fig. 8 shows the time dependent courses of the weights $w_{prost}$ and $w_{pre}$ when the feedback loop is closed and the results from the polarization demultiplexing are fed back. Here, the starting clock frequency is set to 10.709128 GHz (i.e., initially the clock frequency has an offset of 100 KHz). Due to the feedback, the frequency of the clock signal is corrected and the clock signal locks to the incoming data signal, thereby the weight $w_{post}$ and $w_{pre}$ tend to converge to the same values resulting to a measured BER of $1.4 \cdot 10^{-4}$

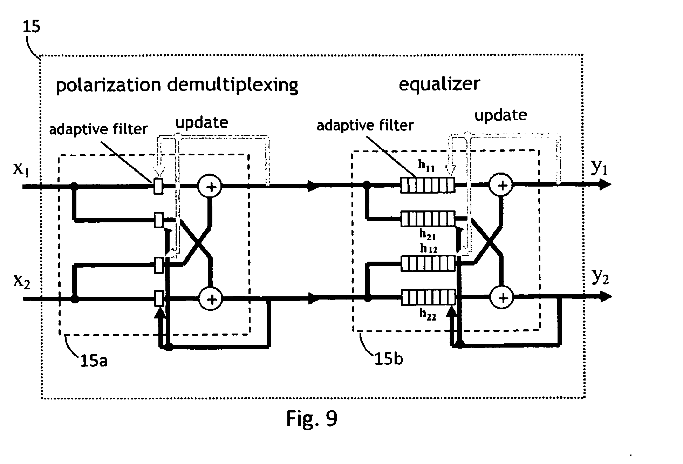

Fig. 9 illustrates a second embodiment of the polarization demultiplexing and equalization unit 15 in Fig. 2. In contrast to the embodiment in Fig. 5 having a combined multi-tap filter for demultiplexing and equalization, the unit 15 in Fig. 9 is composed of two parts, a single tap polarization demultiplexer 15a and a multi-tap equalizer 15b. Using a separate polarization demultiplexer 15a as shown in Fig. 9 may improve the convergence behavior. The polarization demultiplexer 15a performs the rotation function as explained above. In practice, polarization demultiplexing may be not done perfectly by the polarization demultiplexer 15a. Especially, in order to compensate for PMD, information of the pre-cursor and the post-cursors should be taken into account for performing the complete polarization demultiplexing process. This is done in the subsequent equalizer 15b used for signal equalization and improving the polarization demultiplexing process. The equalizer 15b comprises four delay lines associated to four equalizer sub-filters. The structure of the equalizer 15b corresponds to the structure of the multi-tap filter in Fig. 3. The tap coefficients of the demultiplexer 15a are determined by using the CMA as explained above (in Fig. 9 the CMA units for computing the coefficients are not shown). Also, the tap coefficients $h_{ij}$ of the equalizer 15b are determined by using the CMA as explained above. The remarks related to clock recovery with respect to the embodiment in Fig. 5 are also applicable to the embodiment in Fig. 9. For adjusting the frequency of the clock signal the post-cursor and pre-cursor tap coefficients of the equalizer 15b, in particular their weights are compared as explained above.

Instead of having the equalizer 15b connected downstream of the demultiplexer 15a, the equalizer may be connected upstream of the demultiplexer 15a. Further, in both cases the equalizer 15b may have only two delay lines (one delay line per signal path) instead of four delay lines.

Finally, it should be noted that the above remarks related to the clock recovery based on monitoring the filter coefficients of four parallel delay lines in a polarization demultiplexing and equalization unit are basically also applicable to a clock recovery scheme based on monitoring a different number of parallel delay lines, e.g., only one or two delay lines.

## Claims

1. A clock recovery apparatus for use in an optical receiver,
   the receiver comprising:

      - electrical means (11a-d) clocked by a clock signal for sampling a received signal; and
      - an adaptive multi-tap filter (30, 31, 33, 34) comprising four tapped delay lines being part of a polarization demultiplexer or being downstream of a polarization demultiplexer, the filter connected downstream of the electrical means and receiving adjustable tap coefficients;

   the clock recovery apparatus being **characterised by**

      - comparison means (16) for comparing precursor and postcursor tap coefficients associated to the four tapped delay lines, wherein the comparison means (16) are configured to compare

         - a weight of precursor tap coefficients associated to the four tapped delay lines and
         - a weight of postcursor tap coefficients associated to the four tapped delay lines; and

      - clock generation means (12, 13) for generating the clock signal, the frequency of the clock signal being controlled in dependency of the comparison of the weights of precursor and postcursor tap coefficients.

2. The clock recovery apparatus of claim 1, wherein the comparison means (16) are configured to determine imbalance between said precursor and postcursor tap coefficients.

3. The clock recovery apparatus of claim 1, wherein
   the comparison means (16) are configured

      - to generate a signal for increasing the frequency of the clock signal if the weight of said precursor tap coefficients is larger than the weight of said postcursor tap coefficients and a signal for decreasing the frequency of the clock signal if the weight of said postcursor tap coefficients is larger than the weight of said precursor tap coefficients.

4. The clock recovery apparatus of claim 1, wherein the middle tap of the delay line is the main tap.

**5.** The clock recovery apparatus of claim 1, wherein the clock recovery apparatus is for use in a coherent optical receiver.

**6.** An optical receiver, the receiver comprising:

- electrical means (11a-d) clocked by a clock signal for sampling a received signal;
- an adaptive multi-tap filter (30, 31, 33, 34) comprising four tapped delay lines being part of a polarization demultiplexer or being downstream of a polarization demultiplexer, the filter connected downstream of the electrical means and receiving adjustable tap coefficients;
- filter coefficients determining means (40, 41) for determining the tap coefficients; and wherein said optical receiver is **characterised by**
- a clock recovery apparatus comprising:

- comparison means (15) for comparing precursor and postcursor tap coefficients associated to the four tapped delay lines, wherein the comparison means (16) are configured to compare
- a weight of precursor tap coefficients associated to the four tapped delay lines and
- a weight of postcursor tap coefficients associated to the four tapped delay lines; and

- clock generation means (12, 13) for generating the clock signal, the frequency of the clock signal being controlled in dependency of the comparison of the weights of precursor and postcursor tap coefficients.

**7.** The optical receiver of claim 6, wherein the coefficients determining means (40, 41) are configured to carry out a constant modulus algorithm for determining the tap coefficients.

**8.** The optical receiver of claim 6, wherein the receiver further comprises electrical compensation means (14a, 14b) for compensating optical dispersion and the filter is connected downstream of the electrical compensation (14a, 14b) means.

**9.** A method for clock recovery in an optical receiver, the optical receiver comprising

- electrical means (11a-d) clocked by a clock signal for sampling a received signal; and
- an adaptive multi-tap filter (30, 31, 33, 34) comprising four tapped delay lines being part of a polarization demultiplexer or being downstream of a polarization demultiplexer, the filter connected downstream of the electrical means and receiving adjustable tap coefficients;

the method being **characterised by** the steps of:

- comparing precursor and postcursor tap coefficients associated to the four tapped delay lines by comparing

- a weight of precursor tap coefficients associated to the four tapped delay lines and
- a weight of postcursor tap coefficients associated to the four tapped delay lines; and

- controlling the clock signal in dependency of the comparison.

**10.** The receiver according to claim 6, wherein a first complex signal associated to a first polarization is fed to a first and a second of the delay lines, and a second complex signal associated to a second polarization is fed to a third and fourth of the delay lines.


**Patentansprüche**

**1.** Taktrückgewinnungsvorrichtung zur Verwendung in einem optischen Empfänger, wobei der Empfänger umfasst:

- Elektrische Mittel (11a-d), welche durch ein Taktsignal zum Abtasten eines empfangenen Signals getaktet werden; und
- einen adaptiven Filter mit mehreren Abgriffen (30, 31, 33, 34), umfassend vier abgegriffene Verzögerungsleitungen, welche Teil eines Polarisations-Demultiplexers oder einem Polarisations-Demultiplexer nachgeschaltet sind, wobei der Filter stromabwärts der elektrischen Mittel angeschlossen ist und einstellbare Abgriffskoeffizienten empfängt;

wobei die Taktrückgewinnungsvorrichtung **gekennzeichnet ist durch**

- Vergleichsmittel (16) zum Vergleichen von mit den vier abgegriffenen Verzögerungsleitungen assoziierten Precursor- und Postcursor-Abgriffskoeffizienten, wobei die Vergleichsmittel (16) dafür konfiguriert sind, zu vergleichen:

- Ein Gewicht von mit den vier abgegriffenen Verzögerungsleitungen assoziierten Precursor-Abgriffskoeffizienten, und
- ein Gewicht von mit den vier abgegriffenen Verzögerungsleitungen assoziierten Postcursor-Abgriffskoeffizienten; und

- Takterzeugungsmittel (12, 13) zum Erzeugen des Taktsignals, wobei die Frequenz des Taktsignals in Abhängigkeit von dem Vergleich der Gewichte der Precursor- und Postcursor-Abgriffskoeffizienten gesteuert wird.

2. Die Taktrückgewinnungsvorrichtung nach Anspruch 1, wobei die Vergleichsmittel (16) für die Ermittlung einer Unausgewogenheit zwischen den besagten Precursor- und Postcursor-Abgriffskoeffizienten konfiguriert sind.

3. Die Taktrückgewinnungsvorrichtung nach Anspruch 1, wobei die Vergleichsmittel (16) für die folgenden Schritte konfiguriert sind:

- Erzeugen eines Signals zum Erhöhen der Frequenz des Taktsignals, wenn das Gewicht der besagten Precursor-Abgriffskoeffizienten größer ist als das Gewicht der besagten Postcursor-Abgriffskoeffizienten, und eines Signals zum Vermindern der Frequenz des Taktsignals, wenn das Gewicht der besagten Postcursor-Abgriffskoeffizienten größer ist als das Gewicht der besagten Precursor-Abgriffskoeffizienten.

4. Die Taktrückgewinnungsvorrichtung nach Anspruch 1, wobei der mittlere Abgriff der Verzögerungsleitung der Hauptabgriff ist.

5. Die Taktrückgewinnungsvorrichtung nach Anspruch 1, wobei die Taktrückgewinnungsvorrichtung für die Verwendung in einem kohärenten optischen Empfänger bestimmt ist.

6. Optischer Empfänger, wobei der Empfänger umfasst:

- Elektrische Mittel (11a-d), welche durch ein Taktsignal zum Abtasten eines empfangenen Signals getaktet werden; und
- einen adaptiven Filter mit mehreren Abgriffen (30, 31, 33, 34), umfassend vier abgegriffene Verzögerungsleitungen, welche Teil eines Polarisations-Demultiplexers oder einem Polarisations-Demultiplexer nachgeschaltet sind, wobei der Filter stromabwärts der elektrischen Mittel angeschlossen ist und einstellbare Abgriffskoeffizienten empfängt;
- Filterkoeffizientenbestimmungsmittel (40, 41) zum Bestimmen der Abgriffskoeffizienten; und wobei der besagte optische Empfänger **gekennzeichnet ist durch**
- eine Taktrückgewinnungsvorrichtung, umfassend:
- Vergleichsmittel (16) zum Vergleichen von mit den vier abgegriffenen Verzögerungsleitungen assoziierten Precursor- und Postcursor-Abgriffskoeffizienten, wobei die Vergleichsmittel (16) dafür konfiguriert sind, zu vergleichen:

- Ein Gewicht von mit den vier abgegriffenen Verzögerungsleitungen assoziierten Precursor-Abgriffskoeffizienten, und
- ein Gewicht von mit den vier abgegriffenen Verzögerungsleitungen assoziierten Postcursor-Abgriffskoeffizienten; und

- Takterzeugungsmittel (12, 13) zum Erzeugen des Taktsignals, wobei die Frequenz des Taktsignals in Abhängigkeit von dem Vergleich der Gewichte der Precursor- und Postcursor-Abgriffskoeffizienten gesteuert wird.

7. Der optische Empfänger nach Anspruch 6, wobei die Koeffizientenbestimmungsmittel (40, 41) für das Ausführen eines Konstant-Modulus-Algorithmus zum Bestimmen der Abgriffskoeffizienten konfiguriert sind.

8. Der optische Empfänger nach Anspruch 6, wobei der Empfänger weiterhin elektrische Kompensationsmittel (14a, 14b) zum Kompensieren einer optischen Dispersion umfasst, und wobei der Filter stromabwärts der elektrischen Kompensationsmittel (14a, 14b) angeschlossen ist.

9. Verfahren zur Taktrückgewinnung in einem optischen Empfänger, wobei der optische Empfänger umfasst:

- Elektrische Mittel (11a-d), welche durch ein Taktsignal zum Abtasten eines empfangenen Signals getaktet werden; und
- einen adaptiven Filter mit mehreren Abgriffen (30, 31, 33, 34), umfassend vier abgegriffene Verzögerungsleitungen, welche Teil eines Polarisations-Demultiplexers oder einem Polarisations-Demultiplexer nachgeschaltet sind, wobei der Filter stromabwärts der elektrischen Mittel angeschlossen ist und einstellbare Abgriffskoeffizienten empfängt;

wobei das Verfahren durch die folgenden Schritte **gekennzeichnet** ist:

- Vergleichen von mit den vier abgegriffenen Verzögerungsleitungen assoziierten Precursor- und Postcursor-Abgriffskoeffizienten durch Vergleichen

- eines Gewichtes von mit den vier abgegriffenen Verzögerungsleitungen assoziierten Precursor-Abgriffskoeffizienten, und
- eines Gewichtes von mit den vier abgegriffenen Verzögerungsleitungen assoziierten Postcursor-Abgriffskoeffizienten; und

- Steuern des Taktsignals in Abhängigkeit von dem Vergleich.

10. Der Empfänger nach Anspruch 6, wobei ein erstes mit einer ersten Polarisation assoziiertes komplexes Signal in eine erste und eine zweite der Verzögerungsleitungen eingespeist wird, und ein zweites mit einer zweiten Polarisation assoziiertes komplexes Signal in eine dritte und eine vierte der Verzögerungsleitungen eingespeist wird.

**Revendications**

1. Appareil de récupération d'horloge destiné à être utilisé dans un récepteur optique, le récepteur comprenant :

- des moyens électriques (11a-d) synchronisés par un signal d'horloge pour échantillonner un signal reçu ; et
- un filtre adaptatif à prises multiples (30, 31, 33, 34) comprenant quatre lignes à retard à prises faisant partie d'un démultiplexeur à polarisation ou se trouvant en aval d'un démultiplexeur à polarisation, le filtre étant connecté en aval des moyens électriques et recevant des coefficients de prise ajustables ;

l'appareil de récupération d'horloge étant **caractérisé par**

- des moyens de comparaison (16) pour comparer les coefficients de prise pré-curseur et post-curseur associés aux quatre lignes à retard à prises, les moyens de comparaison (16) étant configurés pour comparer

- un poids des coefficients de prise pré-curseur associés aux quatre lignes à retard à prises et
- un poids des coefficients de prise post-curseur associés aux quatre lignes à retard à prises ; et

- des moyens de génération d'horloge (12, 13) pour générer le signal d'horloge, la fréquence du signal d'horloge étant commandée en fonction de la comparaison des poids des coefficients de prise pré-curseur et post-curseur.

2. Appareil de récupération d'horloge selon la revendication 1, les moyens de comparaison (16) étant configurés pour déterminer le déséquilibre entre lesdits coefficients de prise pré-curseur et post-curseur.

3. Appareil de récupération d'horloge selon la revendication 1, les moyens de comparaison (16) étant configurés

- pour générer un signal d'accroissement de la fréquence du signal d'horloge si le poids desdits coefficients de prise pré-curseur est supérieur au poids desdits coefficients de prise post-curseur et un signal de réduction de la fréquence du signal d'horloge si le poids desdits coefficients de prise coefficients de prise post-curseur est supérieur au poids desdits coefficients de prise pré-curseur.

**4.** Appareil de récupération d'horloge selon la revendication 1, la prise centrale de la ligne à retard étant la prise principale.

**5.** Appareil de récupération d'horloge selon la revendication 1, l'appareil de récupération d'horloge étant conçu pour être utilisé dans un récepteur optique cohérent.

**6.** Récepteur optique, le récepteur comprenant :

- des moyens électriques (11a-d) synchronisés par un signal d'horloge pour échantillonner un signal reçu ; et
- un filtre adaptatif à prises multiples (30, 31, 33, 34) comprenant quatre lignes à retard à prises faisant partie d'un démultiplexeur à polarisation ou se trouvant en aval d'un démultiplexeur à polarisation, le filtre étant connecté en aval des moyens électriques et recevant des coefficients de prise ajustables ;
- des moyens de détermination des coefficients de filtre (40, 41) pour déterminer les coefficients de filtre ; et ledit récepteur optique étant **caractérisé par**
- un appareil de récupération d'horloge comprenant :

    - des moyens de comparaison (16) pour comparer les coefficients de prise pré-curseur et post-curseur associés aux quatre lignes à retard à prises,
    les moyens de comparaison (16) étant configurés pour comparer

        - un poids des coefficients de prise pré-curseur associés aux quatre lignes à retard à prises et
        - un poids des coefficients de prise post-curseur associés aux quatre lignes à retard à prises ; et

    - des moyens de génération d'horloge (12, 13) pour générer le signal d'horloge, la fréquence du signal d'horloge étant commandée en fonction de la comparaison des poids des coefficients de prise pré-curseur et post-curseur.

**7.** Récepteur optique selon la revendication 6, les moyens de détermination des coefficients (40, 41) étant configurés pour exécuter un algorithme à module constant pour déterminer les coefficients de prise.

**8.** Récepteur optique selon la revendication 6, le récepteur comprenant en outre des moyens de compensation électriques (14a, 14b) pour compenser la dispersion optique et le filtre étant connecté en aval des moyens de compensation électriques (14a, 14b).

**9.** Procédé de récupération d'horloge dans un récepteur optique, le récepteur optique comprenant

- des moyens électriques (11a-d) synchronisés par un signal d'horloge pour échantillonner un signal reçu ; et
- un filtre adaptatif à prises multiples (30, 31, 33, 34) comprenant quatre lignes à retard à prises faisant partie d'un démultiplexeur à polarisation ou se trouvant en aval d'un démultiplexeur à polarisation, le filtre étant connecté en aval des moyens électriques et recevant des coefficients de prise ajustables ;

le procédé étant **caractérisé par**

- Comparaison des coefficients de prise pré-curseur et post-curseur associés aux quatre lignes à retard à prises en comparant

    - un poids des coefficients de prise pré-curseur associés aux quatre lignes à retard à prises et
    - un poids des coefficients de prise post-curseur associés aux quatre lignes à retard à prises ; et

- Commande du signal d'horloge en fonction de la comparaison.

**10.** Récepteur selon la revendication 6, un premier signal complexe associé à une première polarisation étant acheminé à une première et une deuxième des lignes à retard et un deuxième signal complexe associé à une deuxième polarisation étant acheminé à une troisième et une quatrième des lignes à retard.

**Fig. 1**

Fig. 2

precursor taps          postcursor taps

$x_1$

$h_{11}(0)$  $h_{11}(N/2)$  $h_{11}(N)$

30    30    30    30

31

$h_{21}(0)$  $h_{21}(N/2)$  $h_{22}(N)$

30

31

$h_{12}(0)$  $h_{12}(N/2)$  $h_{12}(N)$

30

31

$x_2$

$h_{22}(0)$  $h_{22}(N/2)$  $h_{22}(N)$

30

31

$y_1$

33

$y_2$

34

+

+

+

+

+

+

**Fig. 3**

central tap
coefficients

$$\begin{bmatrix} h_{11} & h_{12} \\ h_{21} & h_{22} \end{bmatrix} \begin{bmatrix} h_{11} & h_{12} \\ h_{21} & h_{22} \end{bmatrix} \begin{bmatrix} h_{11} & h_{12} \\ h_{21} & h_{22} \end{bmatrix} \begin{bmatrix} h_{11} & h_{12} \\ h_{21} & h_{22} \end{bmatrix} \begin{bmatrix} h_{11} & h_{12} \\ h_{21} & h_{22} \end{bmatrix} \begin{bmatrix} h_{11} & h_{12} \\ h_{21} & h_{22} \end{bmatrix} \begin{bmatrix} h_{11} & h_{12} \\ h_{21} & h_{22} \end{bmatrix}$$

0    ....    N/2    ....    N

precursor coefficients      postcursor coefficients

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4334313 A

**Non-patent literature cited in the description**

- **S.J. Savory et al.** Digital Equalisation of 40Gbit/s per Wavelength Transmission over 2480km of Standard Fibre without Optical Dispersion Compensation. *Proceedings of ECOC 2006,* September 2006